# FASCICULE DE BREVET EUROPEEN

(11) **EP 2 175 244 B1**
(45) Date de publication et mention de la délivrance du brevet: **12.08.2015**
(21) Numéro de dépôt: 08305660.6
(22) Date de dépôt: 09.10.2008
(51) Int. Cl.: G01D 5/38

(54) **Système optique pour la lecture de la position d'un corps en mouvement**
Optisches System zur Positionserfassung eines Körpers in Bewegung
Optical system for reading the position of a moving body

(43) Date de publication de la demande: 14.04.2010
(73) Titulaire: Delphi Technologies, Inc., Troy, Michigan 48007 (US)
(72) Inventeur: Ndao, Mandiaye, 67000 Strasbourg (FR); Tupinier, Laurent, 67116 Reichstett (FR)
(74) Mandataire: Delphi France SAS

(56) Documents cités:
- US-A- 5 696 374
- US-A1- 2004 155 178

## Description

La présente invention a trait à un système optique pour la lecture de la position d'un corps en mouvement, en particulier la position angulaire d'un corps en rotation Elle s'applique plus particulièrement à un système comportant une source de lumière émettant un faisceau de lumière laser vers un codeur optique diffractif solidaire du corps en mouvement, ledit codeur comportant des cellules de codage positionnées en vue d'interférer individuellement et séquentiellement avec le faisceau lors du mouvement dudit corps, chaque cellule générant alors un code optique numérique sous forme de taches lumineuses discrètes.

Dans de tels systèmes, une lentille de projection est classiquement placée en sortie de la source de lumière, et il existe des moyens de calibrage qui contrôlent la section du faisceau.

En aval du codeur optique, le système comporte enfin un dispositif de détection du signal constitué par le code optique. Traditionnellement, ce dispositif de détection comporte au moins une rangée de cellules de détection.

Le premier problème que pose ce type de système est le suivant : les taches de lumière constituant le code présentent une surface limitée, de sorte qu'il est nécessaire de positionner le dispositif de détection avec une précision élevée.

Par ailleurs, les moyens de calibrage du faisceau lumineux sont en général constitués d'un diaphragme qui ne laisse passer qu'une fraction du faisceau dans une fente d'une largeur en général choisie d'environ 100 µm. Cette configuration conduit à une perte de plus de 90% de la lumière, diminuant dès lors de manière considérable l'efficacité énergétique du système. Pour que le système fonctionne correctement, il est alors nécessaire de recourir à une source de lumière d'une puissance disproportionnée.

Le document US2004/0155178A1 divulgue un codeur optique comportant un réseau diffractif à pas pour la mise en oeuvre de l'effet Talbot. Ce codeur optique utilise aussi des systèmes à lentilles et diaphragmes, et il nécessite un positionnement du dispositif de détection avec une précision élevée.

La présente invention présente une solution qui remédie à ces inconvénients, tout en proposant une configuration économiquement intéressante car ne requérant pas d'ajustements mécaniques d'une grande précision, et qui s'avère moins onéreuse en termes de composants.

A cet effet, le système optique de l'invention, comportant de manière classique :
- une source de lumière émettant un faisceau de lumière laser ;
- une lentille de projection placée en sortie de la source de lumière ;
- des moyens de calibrage contrôlant la section du faisceau ;
- un codeur optique diffractif solidaire du corps en mouvement, comportant des cellules de codage positionnées en vue d'interférer successivement avec le faisceau calibré, chaque cellule générant un code optique numérique sous forme de taches lumineuses ;
- un dispositif de détection du code optique formant le signal issu du codeur optique constitué d'au moins une rangée de cellules de détection ;
se caractérise à titre principal en ce que les moyens de calibrage et la lentille de projection sont intégrés dans un composant optique diffractif unique traversé par le faisceau de lumière et focalisant le faisceau d'une part dans le plan des cellules de codage dans une première direction d'allure perpendiculaire à la direction du mouvement et d'autre part dans le plan des cellules de détection dans une seconde direction d'allure perpendiculaire à l'axe de leur rangée.

Plus précisément, la section du faisceau lumineux issu du composant optique diffractif de l'invention et focalisé dans le plan des cellules de codage présente une surface comprise dans une cellule de codage.

La totalité de la lumière parvient dans ce cas au codeur, en une forme au surplus compatible avec les dimensions des cellules de codage, et il n'est donc plus nécessaire d'avoir recours à un diaphragme limitant la section du faisceau de lumière. Il ne subsiste de plus qu'un seul composant regroupant les fonctions mises en oeuvre - dans les systèmes de l'art antérieur - par le diaphragme d'une part, et la lentille de projection d'autre part.

De préférence, selon l'invention, ce composant optique diffractif focalise dans le plan du dispositif de détection les taches lumineuses du code optique des traits lumineux orientés sensiblement perpendiculairement à chaque rangée de cellules de détection.

Cette caractéristique présente l'immense avantage de ne plus rendre le positionnement du dispositif de détection critique par rapport au signal de sortie et donc aux autres composants du système. Les taches de lumière étant à présent transformées en traits, à la manière d'un code barre, le positionnement du réseau de détection peut être effectué de manière moins précise pour se centrer sur le code, ce qui rend le système à la fois plus fiable car moins dépendant d'ajustements ou de dérèglements éventuels, et moins onéreux à la fabrication.

En somme, le composant optique diffractif utilisé dans le cadre de l'invention est une lentille diffractive bifocale, focalisant le faisceau de lumière en deux plans, respectivement situés au niveau du codeur rotatif et du dispositif de détection, selon des formes allongées respectivement dans une direction d'allure normale par rapport à la direction du déplacement du codeur et sensiblement perpendiculairement à la direction de la ou des rangées de cellules de détection.

Dans cette hypothèse, le composant diffractif est en fait conçu pour mettre en oeuvre trois fonctions, à savoir celles exercées par la lentille de projection et le diaphragme dans les systèmes de l'art antérieur, ainsi qu'une mise en forme en code barre du code lumineux en sortie du codeur.

L'utilisation d'un seul composant a bien entendu des répercussions économiques très favorables. L'incidence est économiquement favorable également en termes de fabrication de l'ensemble du système optique de l'invention, qui ne nécessite plus le positionnement relatif d'autant de composants que par le passé d'une part, et ne requiert surtout plus le placement extrêmement précis (de l'ordre de quelques microns) du dispositif de détection dans le système optique dans son ensemble.

L'efficacité du système est enfin considérablement augmentée car la totalité de l'énergie lumineuse est utilisée.

De préférence, le composant optique diffractif utilisé est plan. Cela permet en particulier, si la source de lumière utilisée est une diode laser, de remplacer la vitre transparente généralement utilisée en sortie de ladite diode par ledit composant optique.

Dans l'hypothèse d'un corps animé d'un mouvement de rotation, les cellules de codage permettant la lecture de la position angulaire du corps sont disposées sur une piste annulaire d'un disque formant le codeur optique, le composant optique diffractif focalisant le faisceau, dans le plan du disque, dans une direction d'allure radiale.

Ainsi, l'élément optique diffractif multifonctions faisant l'objet de la présente invention combine à la fois un rendement énergétique optimal, en tout état de cause bien supérieur à ce qui existait dans l'art antérieur, et un certain nombre d'avantages industriels dus à une réduction du nombre de composants et à des contraintes de tolérance moins critiques pour leur assemblage. La conséquence est une réduction sensible des coûts de fabrication de tels systèmes optiques, qui présentent cependant une bien meilleure fiabilité.

L'invention va à présent être décrite plus en détail, en référence aux figures annexées, pour lesquelles :
- la figure 1 est une vue schématique d'un dispositif de codage angulaire de l'art antérieur, montrant le type de code optique obtenu ;
- la figure 2 représente, sous la même forme, le système optique de la présente invention ;
- la figure 3 est un diagramme montrant la forme et le positionnement des signaux obtenus grâce au composant diffractif utilisé dans le cadre de l'invention ; et
- la figure 4 est une représentation d'un composant optique diffractif plan multifonction selon la présente invention.

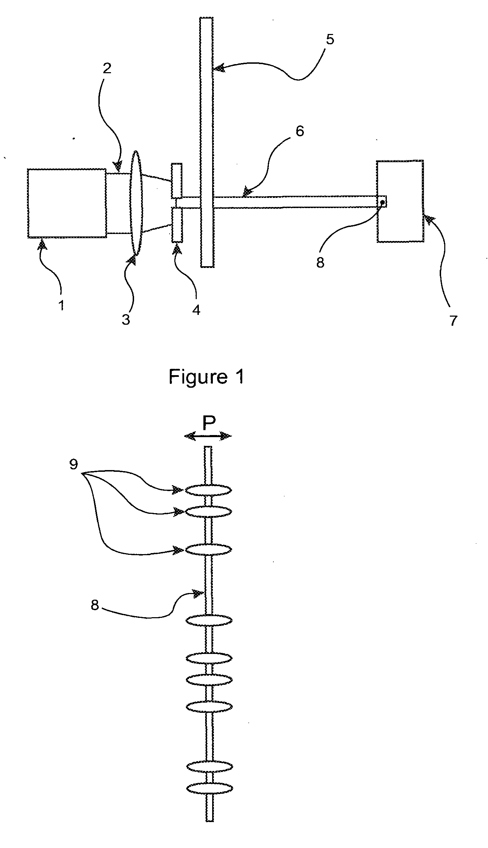

En référence à la figure 1, la source de lumière (1), en l'espèce une diode laser, émet un faisceau lumineux (2) à destination d'une lentille de projection (3) en sortie duquel le faisceau (2) est concentré vers un diaphragme (4) dans lequel est pratiquée une fente qui limite la section active du faisceau. Ce dernier, ainsi formaté par le diaphragme (4), est envoyé à destination d'un codeur (5) solidaire d'un élément en rotation (non représenté) dont on veut connaître la position angulaire.

Le codeur (5) comporte des cellules de codage, en sortie desquelles un signal lumineux (6) sous forme de taches lumineuses (9) constituant un code optique numérique est envoyé à destination d'un dispositif de détection (7) comportant au moins une rangée (8) de cellules de détection.

La forme des taches lumineuses (9) apparaît dans le bas de la figure 1. Compte tenu de la surface limitée occupée par lesdites taches, le positionnement de la rangée (8) doit être effectué de manière très précise pour que la détection puisse s'opérer de manière correcte. Par ailleurs, comme déjà mentionné auparavant, l'existence du diaphragme (4), comportant une fente d'allure rectangulaire et de dimension réduite, conduit à ne laisser passer qu'environ 10% de l'énergie lumineuse à destination du codeur (5). Cette réduction considérable de l'énergie utilisée aboutit à diminuer l'efficacité du système.

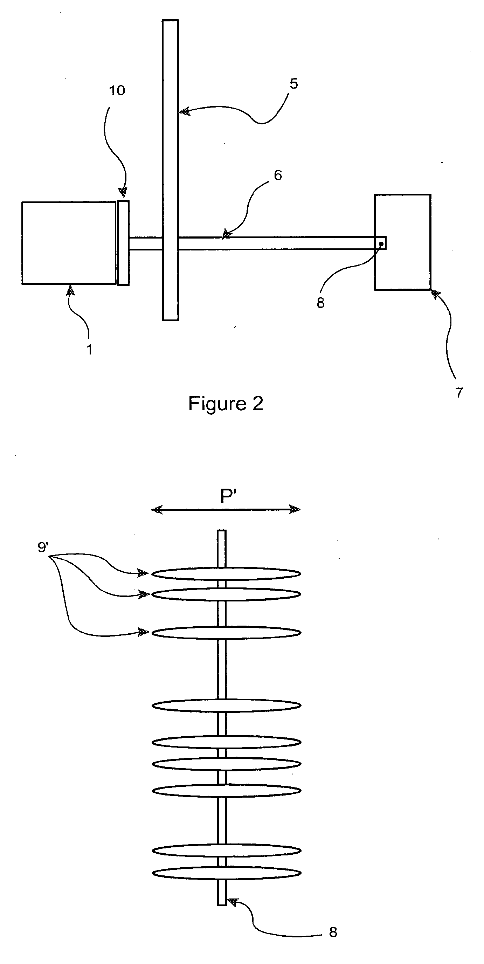

En réponse à ces inconvénients, l'invention, telle que représentée en figure 2, permet d'éviter d'une part la multiplication des composants dans le système optique, d'autre part un positionnement trop critique de ces composants les uns par rapport aux autres, et assure enfin une utilisation optimale de l'énergie lumineuse. Ainsi, la diode laser (1) comporte, en lieu et place de la fenêtre de sortie transparente qui l'équipe traditionnellement, un composant optique diffractif plan (10) qui intègre plusieurs fonctions.

Ainsi, ce composant remplace à la fois la lentille de projection (3) et le diaphragme (4), et permet de plus d'allonger les taches lumineuses (9) en des traits lumineux (9') (voir en figure 2) rendant la tolérance de positionnement (P') bien moins critique que dans la figure 1 (tolérance de positionnement P de l'ordre de ± 150 µm).

Dans l'hypothèse présentée en figure 2, la tolérance du positionnement est de l'ordre de ± 1,5 mm, c'est-à-dire que cette tolérance est environ 10 fois plus élevée que dans les systèmes optiques classiques.

Le code optique numérique qui constitue le signal lumineux (6) en aval du codeur (5) se présente sous la forme d'un code barre avec des traits lumineux (9') disposés sensiblement perpendiculairement à la direction de l'axe de la rangée de cellules de détection (8). Il est facilement compréhensible que la tolérance de positionnement de ladite rangée (8) soit dès lors bien moins critique qu'auparavant.

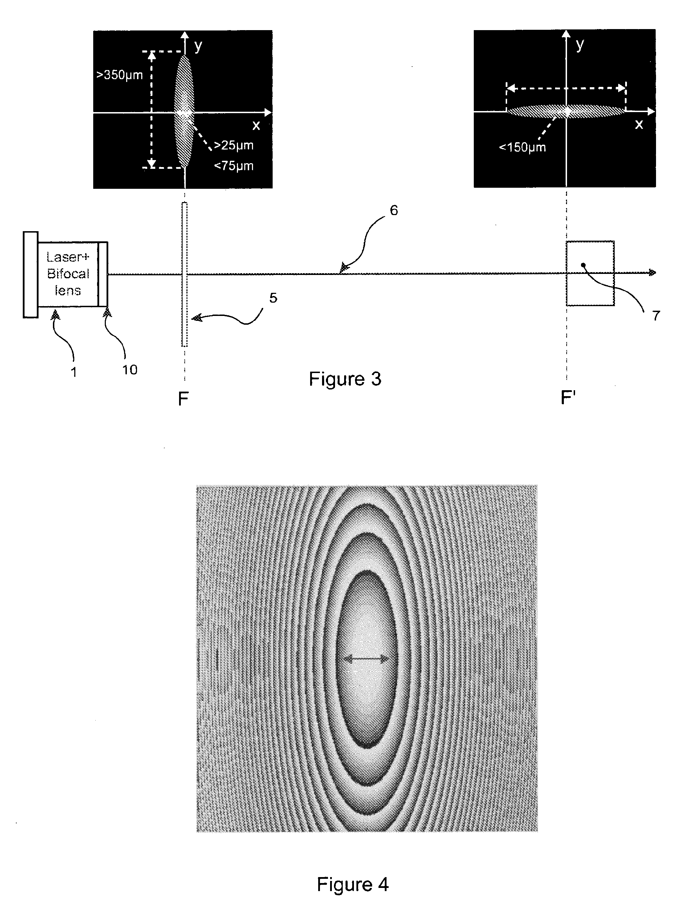

Plus précisément, comme indiqué précédemment, le composant diffractif planaire est une lentille bifocale, qui focalise le faisceau lumineux suivant deux plans (F, F') comme schématisé en figure 3. Ainsi, la diode laser (1) émet un faisceau qui est focalisé par le composant diffractif plan (10) d'une part dans le plan (F), qui est en substance le plan de rotation du codeur (5), de telle sorte que le faisceau lumineux interfère avec les cellules des codages diffractifs disposées radialement les unes à la suite des autres sur une piste annulaire du codeur rotatif (5).

La forme du faisceau lumineux est montrée dans le diagramme apparaissant au-dessus du codeur (5). Il s'agit d'une forme allongée du type ellipse, avec un grand axe qui est disposé radialement par rapport au codeur (5). La totalité de la lumière est donc concentrée sur un petit secteur angulaire, ce qui permet le cas échéant d'augmenter le nombre de cellules de codage, et par conséquent la résolution du capteur optique. L'ensemble de l'énergie lumineuse est en outre disponible sur chaque cellule de codage.

Le signal lumineux est par ailleurs focalisé sur le plan (F'), qui est celui de la ou des rangées de cellules de détection (8) du dispositif de détection (7). Comme le montre le diagramme disposé au-dessus du détecteur (7), la lumière est cette fois orientée dans une direction sensiblement perpendiculaire à la direction de conformation du faisceau au niveau du plan (F), la seconde focalisation permettant un allongement des taches lumineuses visant à obtenir un code optique ayant la forme d'un code barre, l'orientation des barres étant perpendiculaire à l'axe de la rangée (8) des cellules de détection.

Un composant diffractif permettant de mettre en oeuvre les fonctions précitées est par exemple montré en figure 4. Il peut être obtenu par toute technique classique, et par exemple par embossage de formes microstructurées sur la fenêtre de sortie de la diode laser (1). Cet embossage est obtenu de manière automatisée par ordinateur, offrant la possibilité de calculer à l'avance la forme des rayons lumineux obtenus. Ainsi, au niveau du plan (F), il est parfaitement possible d'obtenir une forme ellipsoïdale de grand axe compris entre 350 et 400 µm, alors que le petit axe est compris entre 25 et 75 µm.

Par ailleurs, il est également possible de calculer une configuration de microstructures générant ensuite des traits lumineux au niveau du plan (F'), d'une longueur de l'ordre de 150 µm.

Ces valeurs sont indiquées à titre informatif, et ne limitent pas la portée du présent droit.

## Revendications

1. Système optique pour la lecture de la position d'un corps en mouvement, comportant :
- une source de lumière (1) émettant un faisceau de lumière laser (2) ;
- une lentille de projection (3) placée en sortie de la source de lumière (1) ;
- des moyens de calibrage (4) contrôlant la section du faisceau (2) ;
- un codeur (5) optique diffractif solidaire du corps en mouvement, comportant des cellules de codage positionnées en vue d'interférer successivement avec le faisceau (2) calibré, chaque cellule générant un code optique numérique sous forme de taches lumineuses (9) ;
- un dispositif de détection (7) du code optique formant le signal issu du codeur (5) optique constitué d'au moins une rangée de cellules de détection (8) ;
**caractérisé en ce que**
les moyens de calibrage (4) et la lentille de projection (3) sont intégrés dans un composant optique diffractif (10) unique traversé par le faisceau de lumière (2), et focalisant le faisceau (2) d'une part dans le plan (F) des cellules de codage dans une première direction d'allure perpendiculaire à la direction du mouvement et d'autre part dans le plan (F') des cellules de détection dans une seconde direction d'allure perpendiculaire à l'axe de leur rangée (8),
et **en ce que** le composant optique diffractif (10) est une lentille diffractive bifocale.

2. Système optique selon la revendication précédente, **caractérisé en ce que** la section du faisceau lumineux (2) issu du composant optique diffractif (10) et focalisé dans le plan (F) des cellules de codage présente une surface comprise dans une cellule de codage.

3. Système optique selon l'une des revendications précédentes, **caractérisé en ce que** le composant optique diffractif (10) focalise dans le plan (F') du dispositif de détection (7) les taches lumineuses (9) du code optique en des traits lumineux (9') orientés sensiblement perpendiculairement à chaque rangée de cellules de détection (8).

4. Système optique selon l'une quelconque des revendications précédentes, **caractérisé en ce que** le composant optique diffractif (10) est plan.

5. Système optique selon la revendication précédente, **caractérisé en ce que** la source de lumière (1) est une diode laser et le composant optique diffractif (10) remplace la vitre transparente de sortie du faisceau (2) de ladite diode (1).

6. Système optique selon la revendication précédente, **caractérisé en ce que** le corps est animé d'un mouvement de rotation, les cellules de codage permettant la lecture de la position angulaire du corps étant disposées sur une piste annulaire d'un disque (5) formant le codeur optique, le composant optique diffractif (10) focalisant le faisceau (2), dans le plan (F) du disque, dans une direction d'allure radiale.

## Patentansprüche

1. Optisches System zur Einlesen der Position eines Körpers in Bewegung, enthaltend:
- eine Lichtquelle (1), die einen Laserlichtstrahl (2) ausgibt;
- eine Projektionslinse (3), die am Austritt der Lichtquelle (1) angeordnet ist;
- Kalibrierungseinrichtungen (4), welche den Querschnitt des Strahls (2) steuern;
- eine diffraktive, optische Codiervorrichtung (5), die fest mit dem Körper in Bewegung verbunden ist und Codierzellen aufweist, die dazu vorgesehen sind, nacheinander mit dem kalibrierten Strahl (2) zu interferieren, wobei jede Zelle einen digitalen optischen Code in Form von Lichtflecken (9) erzeugt;
- eine Detektionsvorrichtung (7) zum Detektieren des optischen Codes, der das von der optischen Codiervorrichtung (5) stammende Signal bildet, die aus zumindest einer Reihe von Detektionszellen (8) besteht;
**dadurch gekennzeichnet, dass**
die Kalibrierungseinrichtungen (4) und die Projektionslinse (3) in einem einzigen diffraktiven, optischen Teil (10) integriert sind, das von dem Lichtstrahl (2) durchquert wird und den Lichtstrahl (2) einerseits in der Ebene (F) der Codierzellen in einer ersten Verlaufsrichtung senkrecht zur Bewegungsrichtung und andererseits in der Ebene (F') der Detektionszellen in einer zweiten Verlaufsrichtung senkrecht zur Achse ihrer Reihe (8) fokussiert,
und dass das diffraktive, optische Teil (10) eine bifokale diffraktive Linse ist.

2. Optisches System nach dem vorangehenden Anspruch, **dadurch gekennzeichnet, dass** der Querschnitt des Lichtstrahls (2), der von dem diffraktiven optischen Teil (10) stammt und in der Ebene (F) der Codierzellen fokussiert wird, eine Fläche aufweist, die in einer Codierzelle enthalten ist.

3. Optisches System nach einem der vorangehenden Ansprüche, **dadurch gekennzeichnet, dass** das diffraktive optische Teil (10) in der Ebene (F') der Detektionsvorrichtung (7) die Lichtflecken (9) des optischen Codes in Lichtstriche (9') fokussiert, die im Wesentlichen senkrecht zu jeder Reihe von Detektionszellen (8) ausgerichtet sind.

4. Optisches System nach einem der vorangehenden Ansprüche, **dadurch gekennzeichnet, dass** das diffraktive optische Teil (10) eben ist.

5. Optisches System nach dem vorangehenden Anspruch, **dadurch gekennzeichnet, dass** die Lichtquelle (1) eine Laserdiode ist und dass das diffraktive optische Teil (10) die transparente Scheibe zum Austritt des Lichtstrahls (2) der Diode (1) ersetzt.

6. Optisches System nach dem vorangehenden Anspruch, **dadurch gekennzeichnet, dass** der Körper in eine Drehbewegung versetzt wird, wobei die Codierzellen, die das Einlesen der Winkelposition des Körpers gestatten, auf einer ringförmigen Bahn eines die optische Codiervorrichtung bildenden Scheibe (5) angeordnet sind, wobei das diffraktive optische Teil (10) den Lichtstrahl (2) in der Ebene (F) der Scheibe in einer radialen Verlaufsrichtung fokussiert.

## Claims

1. Optical system for reading the position of a moving body, comprising:
- a light source (1) emitting a beam of laser light (2);
- a projection lens (3) placed at the output of the light source (1);
- calibrating means (4) controlling the cross section of the beam (2);
- a diffractive optical coder (5) securely fastened to the moving body, comprising coding cells positioned with a view to interfering in succession with the calibrated beam (2), each cell generating a digital optical code taking the form of light spots (9); and
- a device (7) for detecting the optical code forming the signal issued from the optical coder (5), consisting of at least one row of detecting cells (8);
**characterized in that**
the calibrating means (4) and the projection lens (3) are integrated into a single diffractive optical component (10) through which the light beam (2) passes, said component focusing the beam (2), on the one hand, on the plane (F) of the coding cells in a first shape direction perpendicular to the direction of movement of the moving body, and on the other hand, on the plane (F') of the detecting cells in a second shape direction perpendicular to the axis of their row (8),
and **in that** the diffractive optical component (10) is a bifocal diffractive lens.

2. Optical system according to the preceding claim, **characterized in that** the cross section of the light beam (2) issued from the diffractive optical component (10) and focused on the plane (F) of the coding cells has an area that fits into one coding cell.

3. Optical system according to one of the preceding claims, **characterized in that** the diffractive optical component (10) focuses, on the plane (F') of the detecting device (7), the light spots (9) of the optical code into lines of light (9') oriented substantially perpendicular to each row of detecting cells (8).

4. Optical system according to any one of the preceding claims, **characterized in that** the diffractive optical component (10) is planar.

5. Optical system according to the preceding claim, **characterized in that** the light source (1) is a laser diode and the diffractive optical component (10) replaces the transparent window through which the beam (2) is output from said diode (1).

6. Optical system according to the preceding claim, **characterized in that** the body is animated by a rotary movement, the coding cells allowing the angular position of the body to be read being placed on an annular track of a disc (5) forming the optical coder, the diffractive optical component (10) focusing the beam (2), on the plane (F) of the disc, in a radial shape direction.
